# EUROPEAN PATENT APPLICATION

(11) **EP 4 852 171 A1**
(43) Date of publication of application: **09.12.2026**
(21) Application number: 25748375.0
(22) Date of filing: 17.01.2025
(51) Int. Cl.: H01M 50/242, H01M 50/204, H01M 50/209, H01M 50/213, H01M 50/289, H01M 50/291, H01M 50/293, H01M 50/342, H01M 50/35, H01M 50/358, H01M 50/367, H01M 50/383

(54) **BATTERY PACK**

(30) Priority: 31.01.2024 JP 2024013414
(71) Applicant: Panasonic Intellectual Property Management Co., Ltd., Kadoma-shi, Osaka 571-0057 (JP)
(72) Inventor: SUMI, Tatsuya, Kadoma-shi, Osaka 571-0057 (JP); MATSUSHITA, Fumiya, Kadoma-shi, Osaka 571-0057 (JP); NAITO, Atsushi, Kadoma-shi, Osaka 571-0057 (JP); NORIMINE, Shota, Kadoma-shi, Osaka 571-0057 (JP); HIRANO, Tatsuya, Kadoma-shi, Osaka 571-0057 (JP)
(74) Representative: Eisenführ Speiser
(86) International application number: PCT/JP2025/001409
(87) International publication number: WO 2025/164379

(57) **Abstract**

A battery pack includes: a plurality of secondary battery cells each of which includes, on one of cell end faces, a gas release valve that opens in response to an increase in an internal pressure; a battery holder that holds the plurality of secondary battery cells, and includes a pair of main surfaces and lateral surfaces that connect the pair of main surfaces; an outer case that houses the battery holder in which the plurality of secondary battery cells are held; and protective sheets that cover the pair of main surfaces of the battery holder. Each of the protective sheets continuously covers one of the pair of main surfaces and at least a portion of the lateral surfaces that is continuous with the one of the pair of main surfaces. Each of the protective sheets covers the cell end faces that include the gas release valves.

## Description

### TECHNICAL FIELD

The present disclosure relates to a battery pack.

### BACKGROUND ART

A battery pack that houses rechargeable secondary battery cells, such as lithium-ion secondary batteries, inside an outer case to drive an electrical device has been used in various applications (for example, Patent Literature (PTL) 1 and PTL 2). In such a battery pack, it is necessary to protect the secondary battery cells housed in the outer case from external shock and vibration.

However, realizing such a structure was not easy. In particular, in recent years, there has been a demand for the miniaturization and weight reduction of the battery pack. At the same time, there is also a requirement for cost reduction, making it difficult to secure the necessary space and cost to add features such as impact resistance.

### Citation List

### Patent Literature

[PTL 1] Japanese Unexamined Patent Application Publication No. 2023-146553
[PTL 2] Japanese Patent No. 5159038

### SUMMARY OF THE INVENTION

An object of the present disclosure is to provide a battery pack with a simplified structure for protecting secondary battery cells. Another object of the present disclosure is to provide a battery pack with an increased reliability. The aims and objects in the present disclosure described above do not disturb the existence of other aims and objects. Note that an embodiment of the present disclosure do not need to achieve all of the objects. Moreover, other objects can be derived from and extracted from the description of the specification, drawings, and claims of the present disclosure.

A battery pack according to an aspect of the present disclosure includes: a plurality of secondary battery cells each of which includes, on one of cell end faces, a gas release valve that opens in response to an increase in an internal pressure; a battery holder that holds the plurality of secondary battery cells and includes a pair of main surfaces and lateral surfaces that connect the pair of main surfaces; an outer case that houses the battery holder in which the plurality of secondary battery cells are held; and protective sheets that cover the pair of main surfaces of the battery holder. Each of the protective sheets continuously covers one of the pair of main surfaces and at least a portion of the lateral surfaces that are continuous with the one of the pair of main surfaces. Each of the protective sheets covers the cell end faces including the gas release valves.

With the battery pack according to an aspect of the present disclosure, by using protective sheets, which cover the battery holder to improve impact resistance and the like, to cover the cell end faces that include gas release valves, in the event that high-temperature and high-pressure gas is released from the gas release valve of any one of the secondary battery cells, the protective sheets prevent the flame from leaking outside.

### BRIEF DESCRIPTION OF THE DRAWINGS

[FIG. 1] FIG. 1 is a perspective view illustrating a battery pack according to Embodiment 1.
[FIG. 2] FIG. 2 is a perspective view of the battery pack illustrated in FIG. 1 as seen from a rear side.
[FIG. 3] FIG. 3 is a cross-sectional view taken along line III-III illustrated in FIG. 1.
[FIG. 4] FIG. 4 is a cross-sectional view taken along line IV-IV illustrated in FIG. 1.
[FIG. 5] FIG. 5 is an exploded perspective view of an outer case of the battery pack illustrated in FIG. 1.
[FIG. 6] FIG. 6 is a perspective view of an inner bag illustrated in FIG. 5 as seen from a rear side.
[FIG. 7] FIG. 7 is a plan view of the inner bag illustrated in FIG. 6.
[FIG. 8] FIG. 8 is a development view of a protective sheet illustrated in FIG. 6.
[FIG. 9] FIG. 9 is an exploded perspective view of the inner bag illustrated in FIG. 5.
[FIG. 10] FIG. 10 is an exploded perspective view illustrating a state in which a battery module is taken out from the inner bag illustrated in FIG. 9.
[FIG. 11] FIG. 11 is a plan view of the battery module illustrated in FIG. 10.
[FIG. 12] FIG. 12 is a rear view of the battery module illustrated in FIG. 10.
[FIG. 13] FIG. 13 is an exploded perspective view illustrating a state in which spacer members are removed from the battery module illustrated in FIG. 10.
[FIG. 14] FIG. 14 is an exploded perspective view illustrating a state in which lead plates are further removed from the battery holder illustrated in FIG. 13.
[FIG. 15] FIG. 15 is a further exploded perspective view of the battery holder illustrated in FIG. 14.
[FIG. 16] FIG. 16 is a perspective view illustrating a spacer member.

### DESCRIPTION OF EMBODIMENT

An embodiment of the present disclosure may be identified by the following configurations and features.

In the battery pack according to another aspect of the present disclosure, in the above aspect, each of the protective sheets includes a plurality of first openings that expose, from the protective sheet, at least one or more of a plurality of cell end faces that do not include the gas release valves among the cell end faces of the plurality of secondary battery ells. With such a configuration, in the event that high-temperature and high-pressure gas is released from the gas release valve of any one of the secondary battery cells, instead that gas is directly exhausted from the cell end face that includes a gas release valve, the gas is moved to the position of another cell end face and is exhausted. By doing so, the distance of the gas flow path is increased, which reduces the gas velocity and temperature. As a result, it can be expected that the gas is exhausted to the outside in a safer manner.

Moreover, the battery pack according to another aspect of the present disclosure, in any one of the above aspects, further includes a spacer member interposed between one of the lateral surfaces of the battery holder and the outer case. The spacer member has a heat resistant property. A gas exhaust space is provided by the spacer member between an inner surface of the outer case and one of the lateral surfaces. The gas exhaust space is for exhausting gas released from the gas release valve. The spacer member is provided on one or more cell end faces among the cell end faces of the plurality of secondary battery cells. The one or more cell end faces do not include the gas release valves, and are not exposed from the first openings of the protective sheet. With such a configuration, in the event that gas is released from the gas release valve, it is possible to avoid that the spacer member obstructs the gas release. This allows the spacer member to be added to the battery holder while maintaining smooth gas release. In particular, the cell end faces that include gas release valves are closed with protective sheets to inhibit the occurrence of flame leakage, thereby enabling both the regulation and exhaust of gas.

Moreover, in the battery pack according to another aspect of the present disclosure, in any one of the above aspects, the spacer member is thicker than the protective sheet.

Moreover, in the battery pack according to another aspect of the present disclosure, in any one of the above aspects, each of the protective sheets is made of an elastic member. With such a configuration, even when an external force is applied to the battery pack, the elastic protective sheet mitigates the external force, enabling protection of the battery holder.

Moreover, in the battery pack according to another aspect of the present disclosure, in any one of the above aspects, each of the protective sheets includes a plurality of second openings along a boundary between the one of the pair of main surfaces and the lateral surfaces continuous with the one of the pair of main surfaces. With such a configuration, the plurality of second openings provided spaced apart along the boundary line between the main surface and the lateral surface makes the protective sheet, which is made of an elastic member and is difficult to bend, easier to bend.

Moreover, in the battery pack according to another aspect of the present disclosure, in any one of the above aspects, each of the plurality of second openings is smaller than each of the plurality of first openings. With such a configuration, an increase in the area of each of the first openings, which mainly function to exhaust gas, allows the gas to be smoothly exhausted.

Moreover, the battery pack according to another aspect of the present disclosure, in any one of the above aspects, further includes an inner bag provided in the outer case, the inner bag having a waterproof property and covering an outer periphery of the battery holder. The inner bag includes a check valve that exhausts internal gas, the check valve preventing water from entering from outside. Each of the protective sheets includes a plurality of third openings positioned corresponding to the check valve of the inner bag. With such a configuration, the gas generated inside the inner bag can be exhausted to the outside through the third openings.

Moreover, in the battery pack according to another aspect of the present disclosure, in any one of the above aspects, each of the plurality of third openings is smaller than each of the plurality of second openings. With such a configuration, the area of each of the first openings, which are used for urgently exhausting rapidly generated gas, is made larger than the area of each of the third openings, which are used for exhausting relatively small amounts of gas. This allows gas to be exhausted smoothly.

Moreover, in the battery pack according to another aspect of the present disclosure, in any one of the above aspects, each of the protective sheets is fixed to the one of the pair of lateral surfaces of the battery holder with an adhesive layer.

Moreover, in the battery pack according to another aspect of the present disclosure, in any one of the above aspects, each of the protective sheets is a heat-resistant rubber sheet.

Moreover, in the battery pack according to another aspect of the present disclosure, in any one of the above aspects, each of the protective sheets is a chloroprene-based rubber sheet.

Hereinafter, an embodiment of the present disclosure will be described with reference to the drawings. Note that the following embodiment is an example for embodying the technical idea of the present disclosure, and is not intended to limit the present disclosure to the following description. Moreover, the present specification does not limit the members in the claims to the members in the embodiment. In particular, dimensions, materials, shapes, relative arrangement and the like of structural components described in the embodiment are not intended to restrict the scope of the present disclosure thereto, but are mere explanatory examples, unless particularly specifically described. It is to be noted that sizes, positional relations and the like of members illustrated in each drawing may be exaggerated for clarifying a description. Moreover, in the following description, the same name or symbol denotes the same member or members of the same quality, and a detailed description thereof will be omitted as appropriate. Moreover, each element included in the present disclosure may have a mode where a plurality of elements are made up of the same member and the one member may serve as the plurality of elements, or conversely, a function of one member can be shared and realized by a plurality of members.

The battery pack according to the present disclosure can be used, for example, as a driving power source for mobile bodies such as electric carts, electric scooters, power-assisted bicycles, a power source for wireless devices, a power source for portable electrical devices such as electric cleaners, and electric tools, a backup power supply for servers for stationary energy storage, a power supply device for homes, offices, and factories, and a driving power source for vehicles such as hybrid cars and electric vehicles. Hereinafter, as an embodiment of the present invention, a battery pack that is used as a driving power source for electric motorcycle will be described.

### [Embodiment 1]

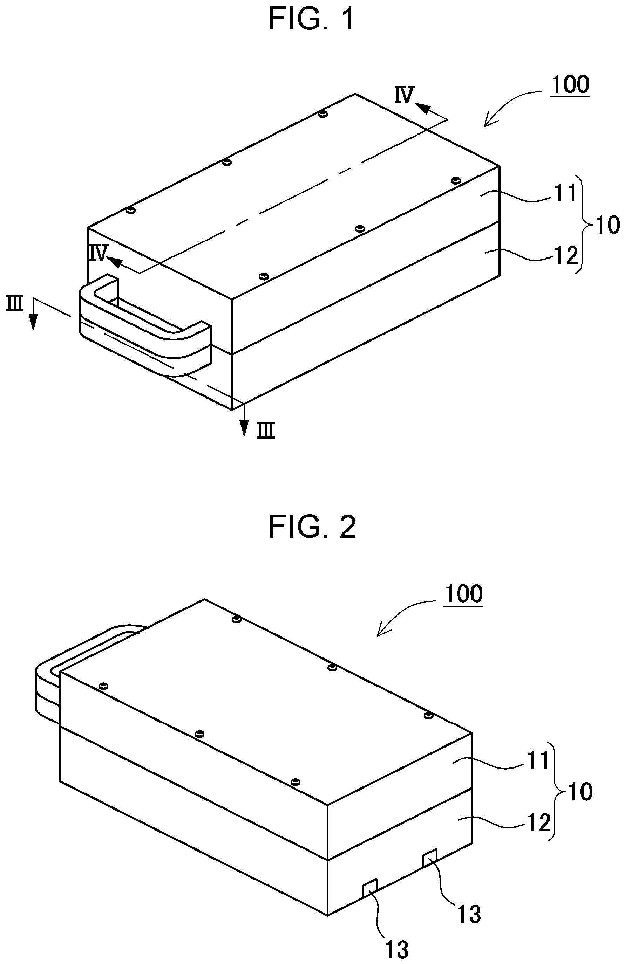

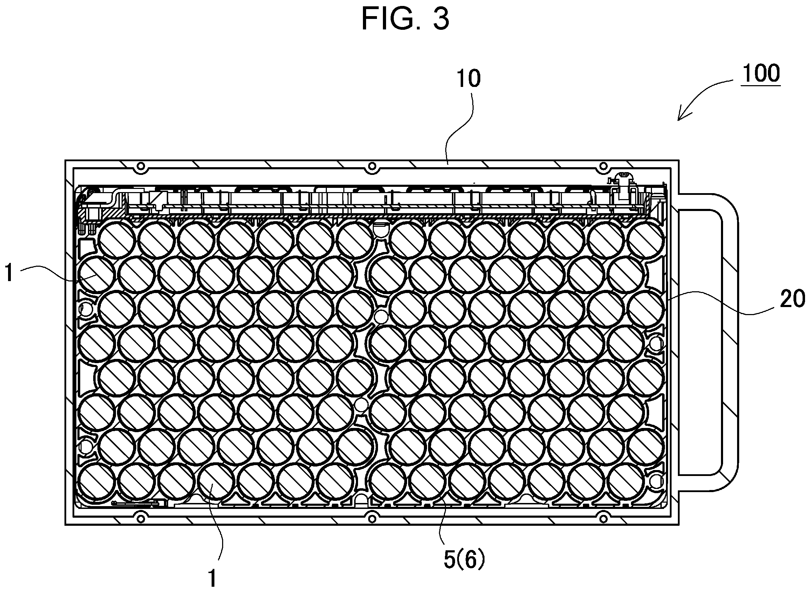

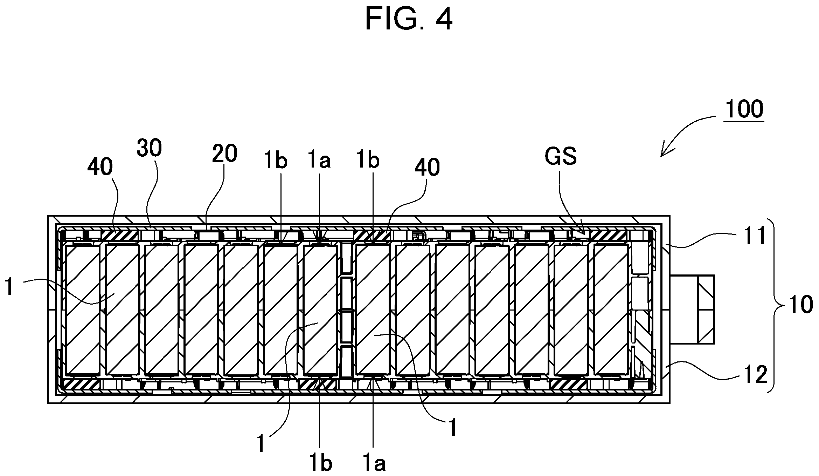

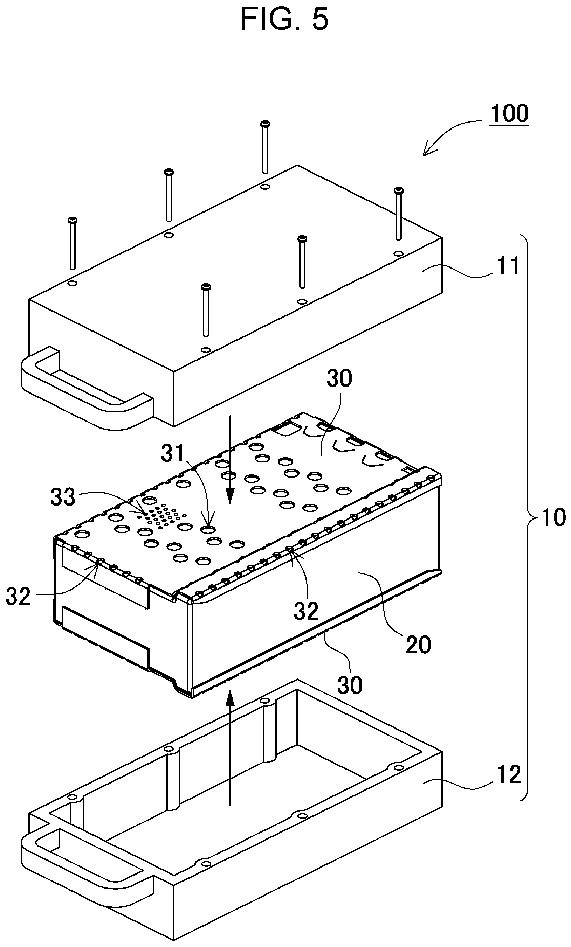

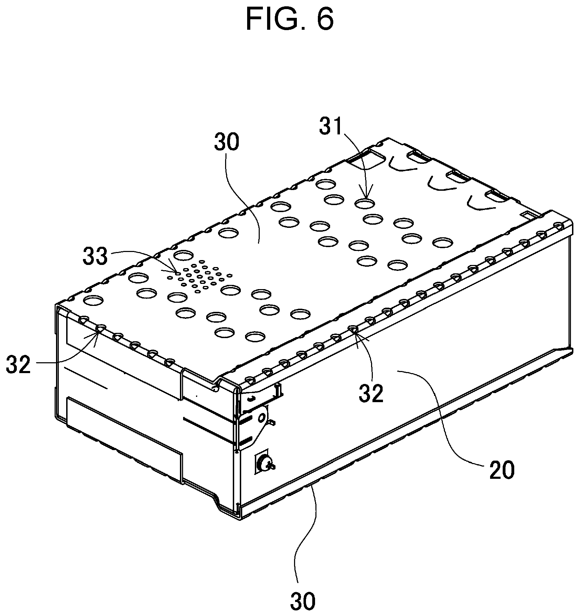

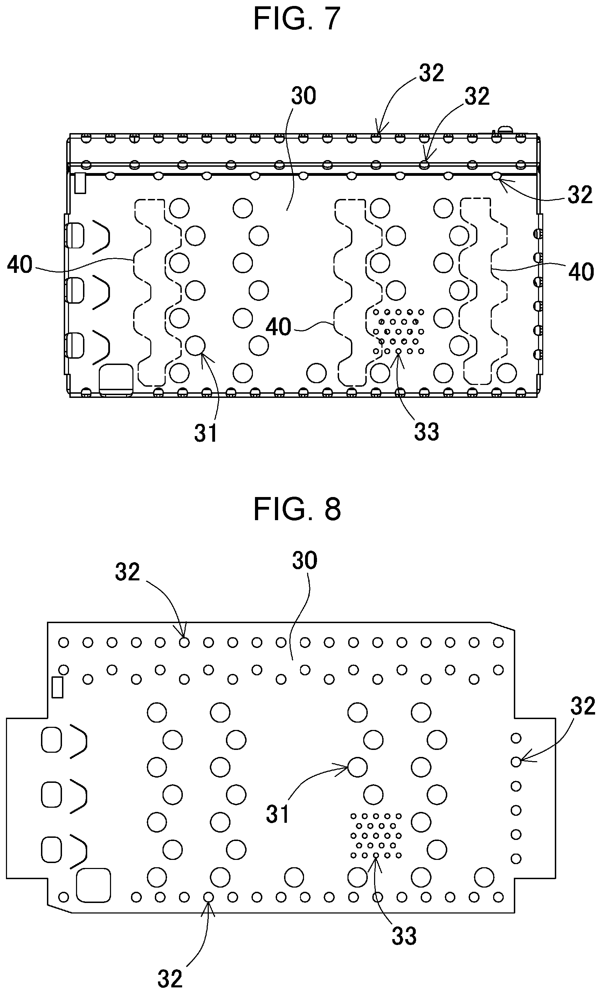

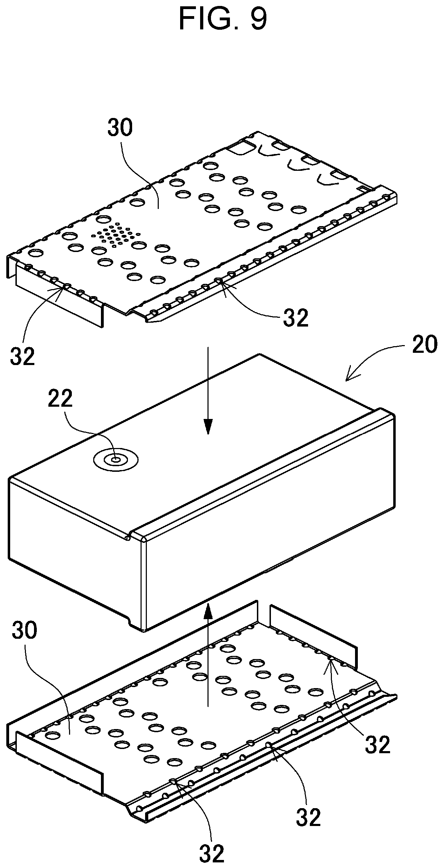

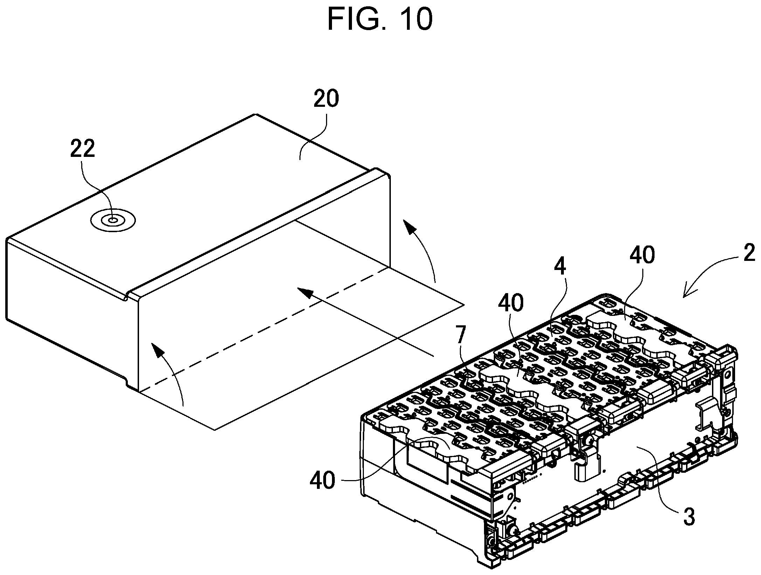

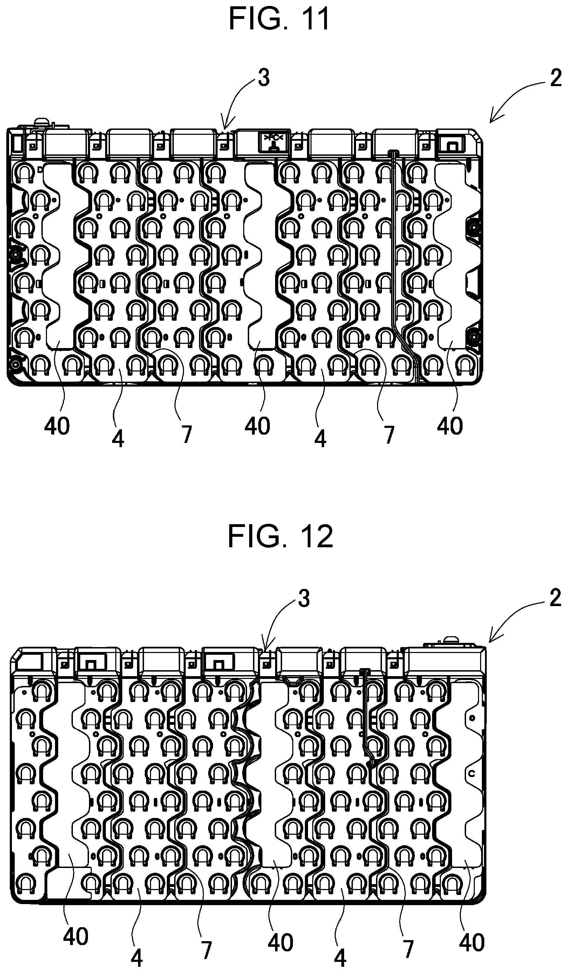

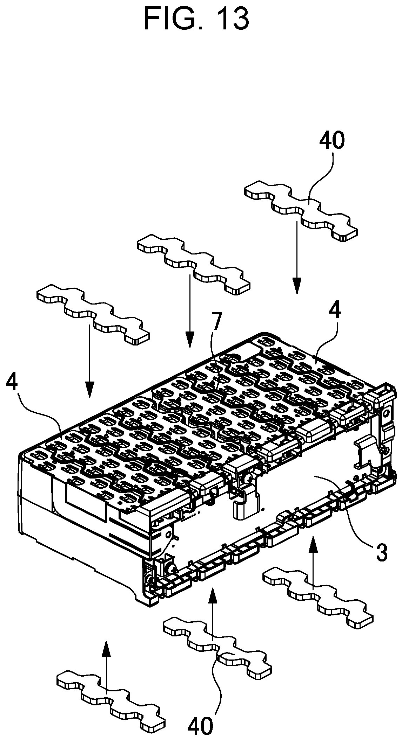

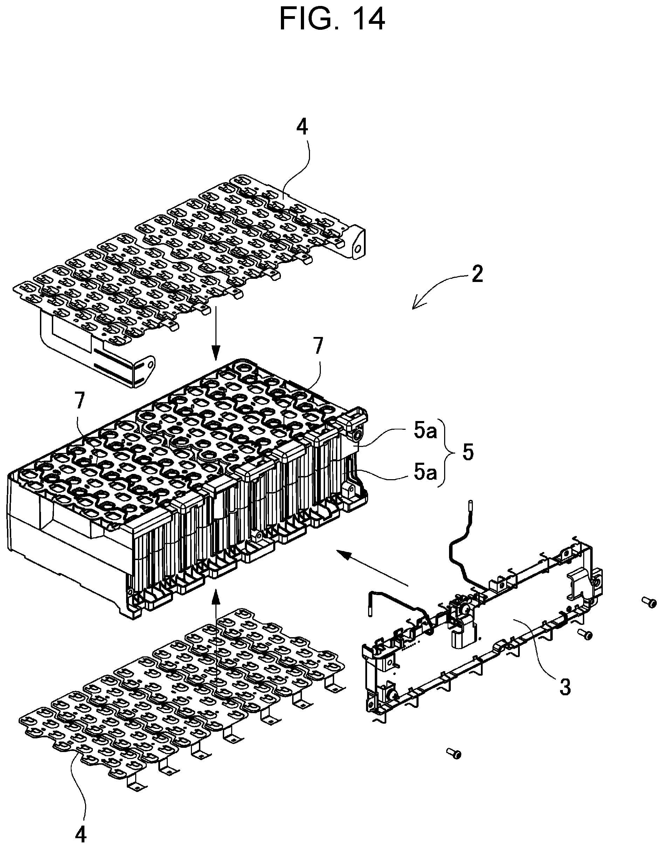

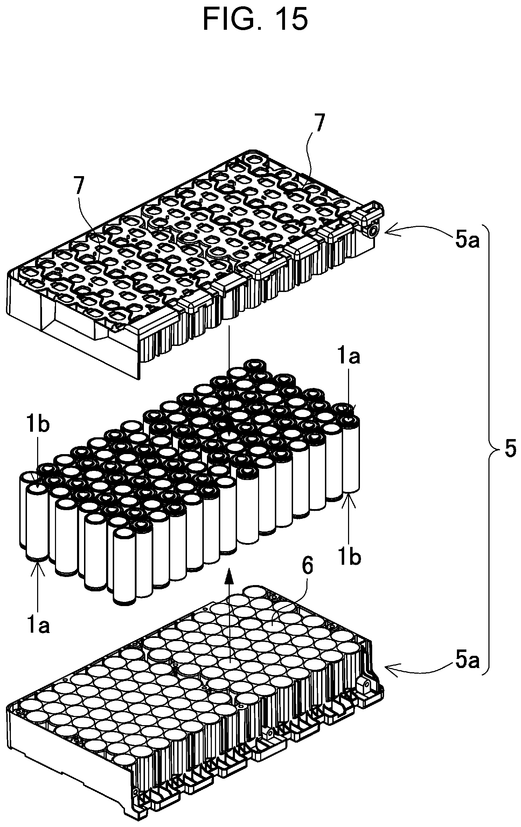

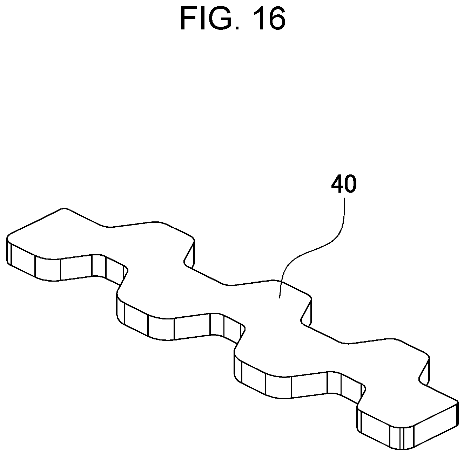

Battery pack 100 according to Embodiment 1 of the present disclosure is illustrated in FIG. 1 to FIG. 16. In these figures: FIG. 1 is a perspective view illustrating battery pack 100 according to Embodiment 1; FIG. 2 is a perspective view of battery pack 100 illustrated in FIG. 1 as seen from a rear side; FIG. 3 is a cross-sectional view taken along line III-III illustrated in FIG. 1; FIG. 4 is a cross-sectional view taken along line IV-IV illustrated in FIG. 1; FIG. 5 is an exploded perspective view of outer case 10 of battery pack 100 illustrated in FIG. 1; FIG. 6 is a perspective view of inner bag 20 illustrated in FIG. 5 as seen from a rear side; FIG. 7 is a plan view of inner bag 20 illustrated in FIG. 6; FIG. 8 is a development view of protective sheet 30 illustrated in FIG. 6; FIG. 9 is an exploded perspective view of inner bag 20 illustrated in FIG. 5; FIG. 10 is an exploded perspective view illustrating a state in which battery module 2 is taken out from inner bag 20 illustrated in FIG. 9; FIG. 11 is a plan view of battery module 2 illustrated in FIG. 10; FIG. 12 is a rear view of battery module 2 illustrated in FIG. 10; FIG. 13 is an exploded perspective view illustrating a state in which spacer members 40 are removed from battery module 2 illustrated in FIG. 10; FIG. 14 is an exploded perspective view illustrating a state in which lead plates 4 are further removed from battery holder 5 illustrated in FIG. 13; FIG. 15 is a further exploded perspective view of battery holder 5 illustrated in FIG. 14; and FIG. 16 is a perspective view illustrating spacer member 40. Battery pack 100 illustrated in these figures includes outer case 10 and inner bag 20.

### (Outer case 10)

Outer case 10 houses inner bag 20. The outer shape of outer case 10 can be of any shape that includes an internal storage space. In the examples illustrated in FIG. 1 to FIG. 4 and the like, outer case 10 has a box shape in which the appearance extends in one direction. Box-shaped outer case 10 is divided into two parts: upper case 11 and lower case 12, divided either into top and bottom parts or left and right parts. Outer case 10 is preferably made of a member which has excellent insulating properties, such as a resin like polycarbonate or a PC-ABS alloy. Outer case 10 may be made of a metal member such as aluminum or its alloy. As illustrated in FIG. 5 and the like, an internal space is provided in outer case 10 to house inner bag 20.

### (Inner bag 20)

Inner bag 20 covers the outer periphery of battery holder 5 inside outer case 10. Inner bag 20 is waterproof, and protects secondary battery cells 1 housed in outer case 10 from water. Therefore, inner bag 20 is made of a waterproof material.

Inner bag 20 is also made of a flexible material. Inner bag 20 has a box shape in the examples such as FIG. 5 to FIG. 7 and FIG. 9 to FIG. 10; however, the shape of inner bag 20 is not necessarily limited to such a shape and may also be a deformable form, such as in the form of a pouch. For such Inner bag 20, resins that are excellent in heat resistance, flame retardancy, flexibility, abrasion resistance, and the like can be used. For example, polyolefin-based resins or polyethylene-based resins, such as PET resin, can be used. In addition, for inner bag 20, a heat-shrinkable tube that shrinks when exposed to heat may be used.

Inner bag 20 further includes check valve 22 that exhausts internal gas while preventing water from entering from the outside.

Inner bag 20 covers the outer periphery of battery holder 5, so that the main and lateral surfaces of inner bag 20 correspond to the main and lateral surfaces of battery holder 5, respectively.

### (Protective sheet 30)

The surfaces of inner bag 20 are covered with protective sheets 30. In the examples of FIG. 6 to FIG. 9, protective sheet 30 is adhered to each of the pair of main surfaces of inner bag 20. Protective sheet 30 continuously covers the main surface of inner bag 20 and at least a portion of the lateral surfaces of inner bag 20 connected to the main surface. With this, the surfaces of inner bag 20 are protected by protective sheets 30.

Each protective sheet 30 is made of an elastic member. By interposing elastic inner bag 20 between the outer surface of flexible inner bag 20 and the inner surface of rigid outer case 10, it is possible to protect inner bag 20 and battery module 2 housed in inner bag 20. Specifically, inner bag 20 and battery module 2 can be protected from external forces such as shock and vibration. It is also possible to prevent situations where flexible inner bag 20 is rubbed and torn due to shock or vibration. Protective sheet 30 is made of, for example, an insulating member, such as a heat-resistant or flame-retardant rubber sheet. Preferably, for protective sheet 30, a chloroprene (CR) rubber sheet can be used.

### (Battery module 2)

As illustrated in FIG. 3, FIG. 4, and FIG. 10, battery module 2 is housed in inner bag 20. Battery module 2, also referred to as "core pack", includes a battery block that houses a plurality of secondary battery cells 1 and circuit board 3. As illustrated in FIG. 10 to FIG. 13, spacer members 40 are adhered to the surfaces of battery module 2.

The battery block includes battery holder 5. Battery holder 5 is divided into a plurality of sub-holders 5a which clamp secondary battery cells 1. In the examples of FIG. 3, FIG. 4, FIG. 14, and FIG. 15, battery holder 5 houses and holds a plurality of cylindrical secondary battery cells 1 in a longitudinal orientation. Secondary battery cells 1 are connected in series or parallel via lead plates 4 or the like. The number of series connections and parallel connections can be arbitrarily set according to the required specifications. In the examples of FIG. 14 and FIG. 15, battery module 2 includes 112 secondary battery cells 1 arranged in 14 series and 8 parallel connections; however, the present disclosure is not limited to such an example. Battery module 2 may include a plurality of battery blocks in each of which secondary battery cells 1 are housed.

Battery holder 5 includes a plurality of storage cylinders 6, each individually housing secondary battery cell 1. In the example of FIG. 15, battery holder 5 is divided into upper and lower parts, and secondary battery cells 1 are housed by being clamped from above and below by storage cylinders 6 divided into two parts. The number of divisions of the battery holder is not limited to two, and may be three or more. Battery holder 5 can be made of resin such as polycarbonate, which has excellent insulating properties.

### (Secondary battery cell 1)

For each secondary battery cell 1, a secondary battery cell with a cylindrical or prismatic shape can be used. In the examples illustrated in FIG. 3, FIG. 4, FIG. 15, and the like, cylindrical secondary battery cells 1 are arranged in a staggered manner in an upright orientation. The number and arrangement of secondary battery cells 1 are not limited to this example, and any number or arrangement can be appropriately adopted. For example, the cylindrical secondary battery cells may be arranged in a matrix configuration.

Each secondary battery cell 1 has positive and negative electrodes. The positive and negative electrodes are preferably provided on respective end faces of secondary battery cell 1. For secondary battery cells 1, known secondary batteries, such as lithium-ion secondary batteries, nickel-metal hydride batteries, and nickel-cadmium batteries, can be appropriately used.

### (Gas release valve)

The outer can of each secondary battery cell 1 includes a gas release valve. The gas release valve opens in response to an increase in the internal pressure of the outer can, releasing the gas inside the outer can to the outside. The gas release valve is provided on one of end faces of secondary battery cell 1. In the example illustrated in FIG. 15 and the like, the gas release valve is provided on the positive electrode side of secondary battery cell 1.

### (Gas exhaust port 13)

On the other hand, gas exhaust ports 13 are provided in portions of outer case 10 to exhaust the high-pressure gas to the outside when the gas release valve of secondary battery cell 1 is opened and the high-pressure gas is released. In the example of FIG. 2, gas exhaust ports 13 are provided on the rear side of lower case 12 of outer case 10. In these examples, each gas exhaust port 13 is rectangular. However, the shape of gas exhaust port 13 is not limited to the rectangular shape, and may be polygonal, such as octagonal, hexagonal, or quadrilateral, circular, track-shaped, elliptical, and the like.

Lead plates 4 are arranged on the main surfaces of battery holder 5. The main surfaces of battery holder 5 also include guide walls 7 to position the location for fixing lead plates 4.

### (Lead plate 4)

Each lead plate 4 connects the electrodes on the end faces of secondary battery cells 1, connecting secondary battery cells 1 in series or parallel. In the examples of FIG. 13, FIG. 14, and the like, the end faces of 112 secondary battery cells 1 are connected by lead plates 4, configuring secondary battery cells 1 in a 14-series by 8-parallel connection. The number and arrangement of the secondary battery cells, as well as the number of series and parallel connections, are not limited to this example, and any number or arrangement can be appropriately adopted. Each lead plate 4 is made of a metal plate having excellent electrical conductive properties, such as an aluminum plate and a nickel plate.

An insulating plate may also be arranged on the end face of lead plate 4. The insulating plate has a size to cover the entire surface of lead plate 4. In addition, a portion of the insulating plate has electrode windows to expose the electrode portions of lead plate 4. Such an insulating plate is made of a material having excellent insulating and fire resistant properties, such as mica.

### (Circuit board 3)

As illustrated in FIG. 13, FIG. 14, and the like, battery module 2 is connected to circuit board 3 via lead plates 4. On circuit board 3, for example, a charge-discharge circuit that charges and discharges secondary battery cells 1 and a protection circuit that monitors the voltage and temperature of secondary battery cells 1 and cuts off the current in case of abnormalities are mounted. Circuit board 3 is made of a glass epoxy substrate or the like. In addition, a board holder for holding such circuit board 3 may be provided.

### (Spacer member 40)

Spacer members 40 are provided on the main surfaces of battery holder 5. Spacer members 40 are interposed between outer case 10 and battery module 2. As illustrated in FIG. 4, a space is provided by spacer members 40 between the inner surface of outer case 10 and the main surface of battery holder 5. This space functions as gas exhaust space GS for exhausting the gas released from the gas release valve. Each spacer member 40 is made of a member having heat-resistant properties. This prevents spacer member 40 from being immediately melted by high heat even when high-temperature and high-pressure gas is released from the gas release valve, thereby ensuring gas exhaust space GS. A chloroprene (CR)-based rubber can be used for such spacer member 40.

Spacer member 40 is also made of a flexible member. With such a configuration, even when an external force is applied to battery pack 100, spacer member 40 mitigates the external force, enabling protection of battery holder 5.

It is preferable to provide spacer member 40 on cell end faces 1b of secondary battery cells 1 that include no gas release valve among the cell end faces of secondary battery cells 1. If spacer member 40 is provided on cell end faces 1a that include gas release valves, in the event that high-temperature and high-pressure gas is released from the gas release valve, the gas release may be obstructed by spacer member 40. As a result, the gas may not be smoothly released to the outside, causing the interior of the outer can to become high-pressure and potentially rupture. By arranging spacer member 40 avoiding cell end faces 1a that include gas release valves, even when the high-temperature and high-pressure gas is released from the gas release valve, it is possible to avoid that spacer member 40 obstructs the gas release. This allows spacer member 40 to be added to battery holder 5 while maintaining smooth gas release.

Spacer member 40 is fixed to the main surface of battery holder 5 via an adhesive layer. For the adhesive layer, a double-sided tape may be used. Spacer member 40 may also be fixed with an adhesive or the like.

It is preferable to fix spacer member 40 to the main surface of battery holder 5 along guide wall 7. This allows guide wall 7, which positions lead plate 4, to also be used for positioning spacer member 40.

Each spacer member 40 continuously covers the cell end faces of a string of secondary battery cells 1 in a state in which a plurality of secondary battery cells 1 are arranged so that the cell end faces are aligned in the same plane. Accordingly, spacer member 40 is formed in accordance with the pattern in which secondary battery cells 1 are stacked. For example, as illustrated in FIG. 16, spacer member 40 has a wave shape in plan view.

Also, as illustrated in FIG. 11 and FIG. 12, a plurality of spacer members 40 are fixed to the main surfaces of battery holder 5. The spacer members 40 are spaced apart from each other. Furthermore, it is preferable that spacer members 40 have a common shape on each of the main surfaces of battery holder 5. In addition, it is preferable that each spacer member 40 on the main surfaces be mirror-symmetrical. With this, common spacer member 40 can be used on both the left and right sides by reversing spacer member 40, thereby reducing the number of components required for the assembly of battery pack 100.

Furthermore, spacer member 40 extends on each main surface of battery holder 5 so as to cover the successive cell end faces. In addition, spacer member 40 defines a space between spacer member 40 and the end portion of the main surface of battery holder 5. With such a configuration, each main surface of battery holder 5 is not completely partitioned by spacer members 40 and a space is provided. By doing so, in the event that gas is released from the gas release valve, the gas flowing along the main surface of battery holder 5 is prevented from being blocked by spacer member 40, allowing spacer member 40 to be added to battery holder 5 while maintaining smooth gas release.

Furthermore, spacer members 40 protect inner bag 20. Spacer member 40 has a continuous linear shape that covers the successive cell end faces on the main surface of battery holder 5. Note that it is preferable not to cover the cell end face located at the end with spacer member 40. With this, battery holder 5 is housed within inner bag 20 to ensure waterproofing, while avoiding covering the cell end face located at the end, thereby preventing excessive stress on inner bag 20 that could cause inner bag 20 to rupture.

Moreover, protective sheet 30 covers cell end faces 1a that include gas release valves. In such a manner, protective sheet 30, which covers battery holder 5 to improve impact resistance and the like, is used to cover cell end faces 1a that include gas release valves. By doing so, even when high-temperature and high-pressure gas is released from the gas release valve of any one of secondary battery cells 1, the high-temperature and high-pressure gas is not immediately exhausted from the battery pack, thereby preventing the flame ignited by the gas from directly leaking outside the battery pack.

In general, in a battery pack, when any abnormality occurs in one of the secondary battery cells housed within the outer case, causing high-pressure gas to be generated inside the outer can, the gas release valve provided on the outer can opens. A structure is required which safely exhausts, to the outside from the outer case, the high-pressure gas released inside the outer case.

However, realizing such a structure was not easy. In particular, in recent years, there has been a demand for the miniaturization and weight reduction of the battery pack. At the same time, there is also a requirement for cost reduction, making it difficult to secure the necessary space and cost to add a structure that safely exhausts the released gas. In view of this, in the present embodiment, protective sheet 30, which improves impact resistance, can also be used as a component that inhibits the occurrence of flame leakage while securing gas exhaust space GS.

### (First opening 31)

Protective sheet 30 further has a plurality of first openings 31. As illustrated in FIG. 7, some of a plurality of cell end faces 1b which include no gas release valves are exposed from first openings 31 of protective sheet 30. With this, in the event that high-temperature and high-pressure gas is released from the gas release valve of any one of secondary battery cells 1, instead that gas is directly released from cell end face 1a including the gas release valve, the gas is moved to the position of cell end face 1b including no gas release valve, that is, to the position where first opening 31 is provided, and then is exhausted. By doing so, the distance of the gas flow path is increased, which reduces the gas velocity and temperature, allowing the gas to be exhausted to the outside in a safer manner.

First openings 31 of protective sheet 30 expose cell end faces 1b including no spacer members 40 and no gas release valves among cell end faces 1b including no gas release valves. In FIG. 7, spacer members 40 provided inside inner bag 20 are indicated by dashed lines. With such a configuration, cell end faces 1a including gas release valves are closed with protective sheet 30 to inhibit the occurrence of flame leakage, thereby enabling both the regulation and exhaust of gas.

Spacer member 40 is thicker than protective sheet 30 to define gas exhaust space GS. On the other hand, reducing the thickness of protective sheet 30 allows protective sheet 30 to be adhered to the surface of inner bag 20 easily, and also prevents an increase in the thickness of battery module 2.

### (Second opening 32)

As illustrated in FIG. 8, protective sheet 30 also has a plurality of second openings 32 along the boundary between the main surface of inner bag 20 and the lateral surface of inner bag 20 connected to the main surface. With this, second openings 32 are provided in protective sheet 30 that is made of an elastic member and is difficult to bend so as to be spaced apart along the boundary line between the main surface and the lateral surface of inner bag 20. As a result, protective sheet 30 becomes easier to bend as illustrated in FIG. 9. In addition, circuit board 3 is provided on one lateral surface of battery holder 5. Therefore, one side along the lateral surface of each of the pair of main surfaces of battery holder 5 has a protruding shape that extends linearly, and one side along the lateral surface of each of the pair of main surfaces of inner bag 20 that covers battery holder 5 also has a protruding shape that extends linearly. As illustrated in FIG. 9, second openings 32 are provided along the boundary of the protruding shape on one side of each of the pair of main surfaces of inner bag 20, so that protective sheet 30 can be easily bent along this protruding shape.

It is preferable that each second opening 32 is smaller than each first opening 31. This allows for an increase in the area of first opening 31, which mainly functions to exhaust gas, enabling smooth gas exhaust.

### (Third opening 33)

Furthermore, as illustrated in FIG. 8, it is preferable that protective sheet 30 has a plurality of third openings 33 at positions corresponding to check valve 22 of inner bag 20. This allows the gas generated inside inner bag 20 to be exhausted to the outside through check valve 22 and third openings 33.

It is preferable that each third opening 33 is smaller than each second opening 32. By making the area of first opening 31, which is used for urgently exhausting rapidly generated gas, larger than the area of third opening 33, which is used for exhausting relatively small amounts of gas, gas can be exhausted smoothly.

In the above example, the use of the battery pack as a power source for an electric scooter has been described; however, the present disclosure is not limited to such an example and the battery pack can also be used for other purposes, such as being mounted on an electrical device to be driven to supply power to the electrical device. Examples of the electrical device include mobile bodies, such as electric vehicles and electric carts, and portable electrical devices. In such electrical devices, when the remaining capacity of the battery pack becomes low or the battery pack undergoes aging deterioration, the battery pack can be replaced to continue using the electrical device. However, the present disclosure is not limited to replaceable battery packs that mainly house secondary battery cells, but can also be applied to configurations where secondary battery cells are housed within the housing of an electrical device. In the present disclosure, a battery pack refers to a unit that includes secondary battery cells within a case, and also to a unit that includes secondary battery cells for driving in the housing of an electrical device itself. In other words, the present disclosure is not limited to replaceable battery packs and can also be applied to electrical devices incorporating secondary battery cells.

### INDUSTRIAL APPLICABILITY

The battery pack according to the present invention can be suitably used as a driving power source for mobile bodies such as electric scooters, electric carts, and power-assisted bicycles, a power source for wireless devices, a power source for portable electrical devices such as electric cleaners, and electric tools, a backup power source for servers and the like, and a stationary power storage device for homes, offices, factories, and the like.

### REFERENCE MARKS IN THE DRAWINGS

- 100: battery pack
- 1: secondary battery cell
- 1a: cell end face including a gas release valve
- 1b: cell end face including no gas release valve
- 2: battery module
- 3: circuit board
- 4: lead plate
- 5: battery holder
- 5a: sub-holder
- 6: storage cylinder
- 7: guide wall
- 10: outer case
- 11: upper case
- 12: lower case
- 13: gas exhaust port
- 20: inner bag
- 22: check valve
- 30: protective sheet
- 31: first opening
- 32: second opening
- 33: third opening
- 40: spacer member
- GS: gas exhaust space

## Claims

1. A battery pack comprising:
a plurality of secondary battery cells each of which includes cell end faces at both ends;
a battery holder configured to hold the plurality of secondary battery cells, the battery holder including a pair of main surfaces and lateral surfaces that connect the pair of main surfaces;
an outer case configured to house the battery holder; and
protective sheets covering the pair of main surfaces of the battery holder,
wherein
a plurality of cell end faces includes the cell end faces,
the plurality of cell end faces include: a plurality of first cell end faces each of which includes a gas release valve that opens in response to an increase in an internal pressure; and a plurality of second cell end faces each of which does not include the gas release valve,
each of the protective sheets continuously covers one of the pair of main surfaces and at least a portion of the lateral surfaces connected to the one of the pair of main surfaces, and
the each of the protective sheets covers the plurality of first cell end faces.

2. The battery pack according to claim 1,
wherein the each of the protective sheets includes a plurality of first openings that expose at least one of the plurality of second cell end faces from the protective sheet.

3. The battery pack according to claim 2, further comprising:
a spacer member interposed between one of the pair of main surfaces of the battery holder and the outer case, the spacer member having a heat resistant property,
wherein a gas exhaust space is provided by the spacer member between an inner surface of the outer case and the one of the pair of main surfaces, the gas exhaust space being for exhausting gas released from the gas release valve, and
the spacer member is provided on one or more second cell end faces among the plurality of second cell end faces, the one or more second cell end faces being not exposed from the plurality of first openings.

4. The battery pack according to claim 3,
wherein the spacer member is thicker than each of the protective sheets.

5. The battery pack according to claim 1,
wherein each of the protective sheets is made of an elastic member.

6. The battery pack according to claim 5,
wherein each of the protective sheets includes a plurality of second openings along a boundary between the one of the pair of main surfaces and the lateral surfaces continuous with the one of the pair of main surfaces.

7. The battery pack according to claim 6,
wherein each of the plurality of second openings is smaller than each of the plurality of first openings.

8. The battery pack according to claim 1, further comprising:
an inner bag provided in the outer case, the inner bag having a waterproof property and covering an outer periphery of the battery holder,
wherein the inner bag includes a check valve that exhausts internal gas, the check valve preventing water from entering from outside, and
each of the protective sheets includes a plurality of third openings positioned corresponding to the check valve of the inner bag.

9. The battery pack according to claim 8,
wherein each of the plurality of third openings is smaller than each of the plurality of second openings.

10. The battery pack according to any one of claims 1 to 9,
wherein each of the protective sheets is fixed to the one of the pair of main surfaces of the battery holder with an adhesive layer.

11. The battery pack according to any one of claims 1 to 9,
wherein each of the protective sheets is a heat-resistant rubber sheet.

12. The battery pack according to any one of claims 1 to 9,
wherein each of the protective sheets is a chloroprene-based rubber sheet.
